# EUROPÄISCHE PATENTANMELDUNG

(11) **EP 1 616 687 A1**
(43) Veröffentlichungstag der Anmeldung: **18.01.2006**
(21) Anmeldenummer: 04016538.3
(22) Anmeldetag: 14.07.2004
(51) Int. Cl.: B29C 47/92, B29C 47/90, B29C 47/88

(54) **Verfahren und Vorrichtung zur Produktionsüberwachung bei der Herstellung von Schlauchfolien**

(71) Anmelder: Kdesign GmbH, 53639 Königswinter (DE)
(72) Erfinder: Fähling, Gerd, 53783 Eitorf (DE); Zimmermann, Richard, 53127 Bonn (DE)

(57) **Zusammenfassung**

Bei einer Anlage zur Herstellung extrudierter Schlauchfolien im Blasfolienverfahren werden zwischen Extrusionswerkzeug (2) und höhenverfahrbarer Kalibriervorrichtung (7) (8) im Bereich der Schlauchbildungszone (11) berührungslos messende Temperatursensoren (23) angeordnet. Aus den gemessenen zeitlichen Temperaturveränderungen werden über einen Prozeßrechner Rückschlüsse auf die Stabilität der Schlauchbildungszone (11) und die stabile Lage der Einfriergrenze (12) gezogen und Korrekturwerte für die Anpassung der beeinflussenden Parameter ermittelt. Durch die permanente Temperaturüberwachung werden Instabilitäten der Schlauchbildungszone (11) bereits im Ansatz erkannt und daraus resultierende Prozeßstörungen vermieden.

## Beschreibung

Die Erfindung betrifft eine Einrichtung zur Überwachung und Konstanthaltung der Produktionsbedingungen für im Blasfolienverfahren extrudierte Schlauchfolien, und zwar insbesondere die Schlauchbildungszone zwischen Austritt am Extrusionswerkzeug und Einfriergrenze.

In diesem Prozess wird Kunststoffschmelze aus einem Extrusionswerkzeug mit Ringkanal-Düse extrudiert und ausgezogen. Der heiße Folienschlauch wird unmittelbar nach dem Austritt aus dem Ringkanal am äußeren und häufig auch am inneren Umfang mit Kühlluft aus einem Luftring bzw. einer Innenkühleinrichtung angeblasen und abgekühlt.
Die Schlauchfolienblase wird in Längsrichtung über eine Kalibriervorrichtung und eine Flachlegeeinrichtung geführt und in einer Abzugseinheit als Flachschlauch von Förderwalzen abgequetscht und abgezogen.
Das sogenannte Einfrieren der Folie erfolgt dicht unterhalb der Kalibriervorrichtung.
Die Foliendimension in Querrichtung und damit die spätere Schlauchbreite ist veränderbar und wird über die durchmesserverstellbare Kalibriervorrichtung in Verbindung mit dem Innenüberdruck der Schlauchfolienblase bestimmt.
Wichtige Qualitätsparameter sind dabei das Dickenumfangsprofil der Schlauchfolienblase und das Dickenprofil in Produktionsrichtung der Anlage.

Die Position und stabile Lage der Einfriergrenze sind bei diesem Prozeß ein wichtiges Kriterium für die Produktionskonstanz der Anlage und dementsprechend für die Produktqualität.
Lage und Stabilität der Einfriergrenze werden im wesentlichen beeinflusst von den folgenden Faktoren bzw. Bedingungen:
- Eingestellte Luftmenge der Außenkühlung
- Eingestellte Luftmenge der Innenkühlung
- Lufttemperatur der Außenkühlung
- Lufttemperatur der Innenkühlung
- Lufttemperatur der Umgebungsluft
- Höheneinstellung der Kalibriervorrichtung
- Anlagendurchsatz
- Verarbeiteter Rohstoff bzw. Rohstoffmischung
- Schmelzetemperaturen in der Extrudereinheit und im Extrusionswerkzeug

Störungen in der Stabilität der Schlauchbildungszone und der Einfriergrenze stellen sich zum einen als kurzzeitige periodische Schwankungen (sog. "Pumpen") dar, z.B. durch eine nicht zum Anlagendurchsatz passende Luftmengeneinstellung der Kühlluft oder eine nicht zum Anlagendurchsatz passende vertikale Einstellung der höhenverfahrbaren Kalibriervorrichtung.
Weiter gibt es auch ein langsames Abdriften der Einfriergrenze durch Änderung von Produktionsbedingungen, z.B. tageszeitabhängige Temperaturschwankungen von Umgebungsluft und Prozesskühlluft in der Außenkühlung und Innenkühlung. Dieses langsame Abdriften führt erst nach Überschreiten eines kritischen Punktes zu Instabilitäten.

Die Festlegung der Einfriergrenze nach dem Anfahren der Anlage durch Einstellung der beeinflussenden Produktionsparameter erfolgt bis heute manuell durch den Bediener, wobei dieser optisch und anhand seiner Erfahrung die Lage der Einfriergrenze und die Blasenstabilität beurteilt. Resultat der manuellen Einstellung ist eine stabile Schlauchbildungszone, die für einen begrenzten Zeitraum eine stabile Produktion und Produktqualität sicherstellt, solange alle beeinflussenden Umgebungsbedingungen und Faktoren nach dieser einmaligen Einstellung unverändert bleiben.

Eine falsche Lage der Einfriergrenze hat gravierende Auswirkungen auf die Produktionsstabilität und Produktqualität.
Die Folge einer zu hohen Lage der Einfriergrenze ist beispielsweise eine drastische Verschlechterung des Dickenumfangsprofils der Schlauchfolienblase durch am Umfang ungleichmäßige Kontaktkühlungseffekte der Kalibriervorrichtung an der noch nicht eingefrorenen Blase, welche die eigentliche Luftkühlung überlagern.
Die hierbei auftretenden Dickenprofilfehler können auch durch aufwendige Querprofil-Regelsysteme nicht oder nur unzureichend ausgeglichen werden.

Das weitere Abdriften der Einfriergrenze nach Oben (z.B. durch Tag/Nacht-Schwankungen der Umgebungsluft-Temperatur) kann nach Erreichen eines kritischen Punktes schlagartig zu Instabilitäten in der Schlauchbildungszone führen.

Instabilitäten treten in gleicher Weise auf, wenn die Einfriergrenze zu tief unterhalb der Kalibriervorrichtung liegt.

Es ist daher für den Produktionsprozess von hoher Wichtigkeit, die Stabilität der Schlauchbildungszone und die Lage der Einfriergrenze ständig zu überprüfen.
Dies ist heute allein von der Qualifikation des Anlagen-Bedienpersonals abhängig und kann nicht permanent erfolgen, sodass es regelmäßig zu Produktionsstörungen mit verschlechterter Produktqualität oder sogar zur Produktionsunterbrechung kommt.
Da in der Schlauchfolien-Extrusion überwiegend Rollensätze mit einer Laufzeit von mehreren Stunden produziert werden, die später auf anderen Maschinen weiterverarbeitet werden, kann bereits das kurzzeitige Auftreten einer Blaseninstabilität die ganze Rolle unbrauchbar machen.

Eine systematische Überwachung der Störgrößen in diesem Bereich und eine automatische Nachführung aller beteiligten Prozessparameter ist nicht bisher bekannt.

Stand der Technik sind lediglich sog. Durchsatzregeleinrichtungen, die über Erfassung der durchgesetzten Materialmenge und Korrektur von Extrudereinheit oder Abzugseinheit das Metergewicht bzw. die mittlere Dicke der Folienbahn konstant halten.
Diese Systeme greifen aber nicht in die Prozessparameter ein, welche die Stabilität der Schlauchbildungszone maßgebend beeinflussen, also z.B. Kühlluftmenge oder Position der Kalibriervorrichtung in Relation zur Höhe der Einfriergrenze.

Des weiteren ist im Patent DE 2721609 C2 eine nicht näher erläuterte Frostlinien-Messvorrichtung genannt, welche die absolute Lage der Frostlinie meßtechnisch erfassen soll und in Verbindung mit einem Regelkreis die Korbhöhe anpasst. Eine derartige Frostlinien-Messvorrichtung ist bis heute in der Praxis nicht bekannt oder ausgeführt. Ebenso reicht die in dieser Patentschrift beschriebene alleinige Einstellung der Höhe der Kalibriervorrichtung in Verbindung mit der sich ändernden Einfriergrenze und der damit verbundener Blaseninstabilität nicht aus, da es wie vorstehend beschrieben eine große Zahl anderer wesentlicher Einflussfaktoren gibt.

Die absolute, exakte Höhe der Einfriergrenze ist bis heute messtechnisch nicht zu bestimmen.
Die Einfriergrenze ist in vielen Fällen optisch nicht sichtbar.
Weiter kann der Einfriergrenze keine definierte Folienoberflächentemperatur zugeordnet werden, da eine Rohstoffabhängigkeit besteht, die durch Verarbeitung von Rohstoffmischungen und Extrusion von mehrlagigen Folien aus unterschiedlichen Rohstoffen oder Mischungen auf Coextrusions-Anlagen noch erschwert wird, da jedes Rohstoffmaterial eine etwas anderen Schmelz-/Einfrierpunkt hat.
Eine mögliche optische Überwachung der Blasenform in der Schlauchbildungszone ist zum einen teuer und störanfällig, zum anderen kommt es erst zu erfassbaren Blasenformschwankungen, wenn bereits der Bereich der Instabilität erreicht und die Produktqualität bereits beeinträchtigt wird.

Die nachfolgend beschriebene Erfindung erfasst daher nicht die absolute Lage, sondern überwacht die Veränderung der Einfriergrenzenhöhe indirekt über den sich ändernden Temperaturgradienten entlang der Schlauchbildungszone vom Düsenaustritt bis zur Folienkalibrierung. Über ein Rechenmodell werden alle am Prozess beteiligten und beeinflussbaren Parameter, d.h. z.B. Kühlluftbedingungen (Menge/Temperatur), Durchsatz und ebenso die Höhe der Kalibriervorrichtung so angepaßt, dass die Einfriergrenze der Folie stabil und stets unterhalb der Kalibriervorrichtung bleibt.
Dies bedeutet eine permanente, automatisierte Überwachung, die (wie auch das Bedienpersonal manuell) in die entsprechenden Stellparameter der Anlage eingreift.

Gegenstand und Aufgabe der vorliegenden Erfindung ist die systematische und kontinuierliche Überwachung der Stabilität der Schlauchbildungszone und der Lage der Einfriergrenze nach dem Anfahren der Anlage sowie eine Korrektur der beeinflussenden Faktoren über einen Prozessrechner, ohne dass die exakte, absolute Position der Einfriergrenze als Kenngröße ermittelt werden muß. Prozessveränderungen werden bereits vor Erreichen eines instabilen Zustandes erkannt, die Lage der Einfriergrenze wird durch Anpassung mehrerer geeigneter Prozessparameter stabil und unterhalb der Kalibriervorrichtung gehalten. Daraus resultiert eine dauerhaft stabile Schlauchbildungszone, eine konstante Produktqualität und die Reduzierung von Produktionsausschuß durch Vermeiden von Prozessstörungen.
Die Anpassung erfolgt in einem oder mehreren Stell- oder Regelkreisen oder kombinierten Stell/Regelkreisen, indem die Stabilität bzw. Veränderung der Einfriergrenze indirekt über ein entlang der Schlauchbildungszone aufgenommenes Temperaturprofil ermittelt wird und bei auftretenden Änderungen dieses Temperaturprofils Prozessparameter wie Kühlluftbedingungen (Menge/Temperatur), Höhe der Kalibriervorrichtung, Massedurchsatz der Anlage automatisch so angepasst werden, dass sich der alte Zustand des Temperaturprofils wieder einstellt und gleichzeitig die Einfriergrenze wieder ihre alte Lage einnimmt.

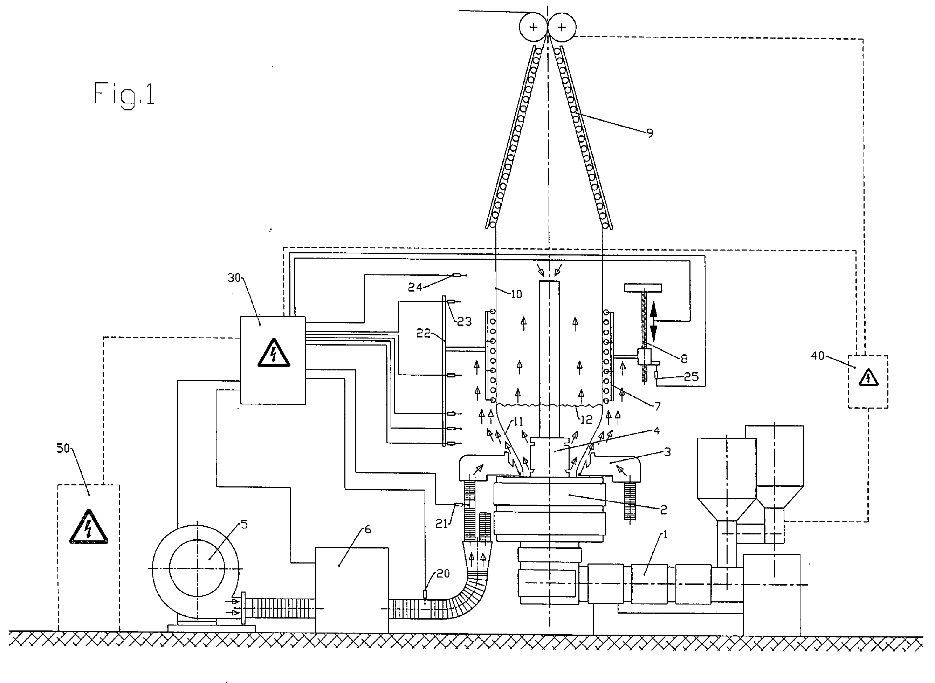

**Fig.1** beschreibt beispielhaft eine mögliche Anordnung der Erfindung in einer Schlauchfolien-Extrusionsanlage.
Die von einer oder mehreren Extrudereinheiten **(1)** erzeugte Kunststoffschmelze wird aus einem Extrusionswerkzeug mit Ringkanal-Düse **(2)** extrudiert und ausgezogen. Der heiße Folienschlauch wird unmittelbar nach dem Austritt aus dem Ringkanal am äußeren und häufig auch am inneren Umfang mit Kühlluft aus einem Luftring bzw. einer Innenkühleinrichtung **(3) (4)** angeblasen und in der sogenannten Schlauchbildungszone **(11)** bis zur Einfriergrenze **(12)** intensiv abgekühlt.
Die Prozessluft für die Außenkühlung **(3)** wird von einem vorzugsweise drehzahlgeregelten Gebläse **(5)** bereitgestellt und über ein Kühlaggregat **(6)** geführt. Die Peripheriekomponenten der Innenkühlung sind nicht dargestellt, diese sind sinngemäß ausgeführt, wenn die Anlage mit Innenkühlung **(4)** ausgerüstet ist.
Die Schlauchfolienblase **(10)** wird in Längsrichtung über eine Kalibriervorrichtung **(7)** geführt und in einer Abzugseinheit **(9)** als Flachschlauch von Förderwalzen abgequetscht und abgezogen.

Zur Ermittlung der Lageveränderung der Erfriergrenze **(12)** wird eine permanente Messung der Folientemperatur an mehreren hintereinanderliegenden Punkten oder Umfangsbereichen stromab nach der Austrittsdüse vorgenommen. Dies geschieht über vorzugsweise berührungslos messende Temperatursensoren **(23),** die beispielsweise in festem Abstand voneinander auf einem gemeinsamen Sensorträger **(22)** montiert sind.
Dieser Sensorträger **(22)** wird in einer bevorzugten Ausführungsform an der höhenverstellbaren Kalibriervorrichtung **(7) (8)** angelenkt und ist mit dieser in der Höhe verfahrbar. Möglich ist aber auch ein in fester Höhe montierter Sensorträger.
Die zeitliche Konstanz der gemessenen Temperaturen bzw. Temperaturgradienten ist ein Indikator für stabile Abkühlbedingungen und damit für eine stabile Schlauchbildungszone **(11)** mit stabiler Höhe der Einfriergrenze **(12).**
Vorzugsweise erfolgt die Temperaturmessung an mehreren Punkten zwischen Extrusionswerkzeug **(2)** und Kalibriervorrichtung **(7)** vor der Einfriergrenze **(12),** sowie zusätzlich dicht nach der Einfriergrenze **(12)** im Bereich der Kalibriervorrichtung **(7).**
In diesen Bereichen führt eine Veränderung der Einfriergrenzenhöhe zu den deutlichsten Änderungen des Folientemperaturprofils, da hier innerhalb von 3-4m der überwiegende Teil der Abkühlung von ca. 220°C auf ca. 75°C erfolgt.
In der einfachsten Ausführungsform werden lediglich 2 Temperatursensoren zwischen Extrusionswerkzeug **(2)** und Einlauf der Kalibriervorrichtung **(7)** angeordnet.

Die Temperaturmessdaten werden an einen Prozessrechner (30) übergeben, der anhand der Messwertschwankungen aus einem vorgegebenen oder errechneten Fenster Stellgrößen (Korrekturgrößen) für die Prozessparameter ermittelt, welche die Abkühlbedingungen und Stabilität der Schlauchbildungszone **(11)** beeinflussen.

In der einfachsten denkbaren Ausführungsform werden dem Prozessrechner **(30)** als Istwerte lediglich die Temperaturmessdaten der Folie übergeben. Der Prozessrechner ermittelt und übergibt Korrekturgrößen für mehrere der vorher beschriebenen beeinflussenden Prozessparameter (z.B. Luftmenge Außenkühlung **(3),** Luftmenge Innenkühlung **(4),** Höhe Kalibriervorrichtung **(7)**), ohne deren Istzustand zu kennen. Die Korrekturgrößen werden den Einstellungen dieser Parameter überlagert, limitiert durch deren Minimal- und Maximalgröße.

In einer erweiterten Ausführungsform werden auch die Istzustände der vorhandenen Kühlbedingungen wie z.B. Luftmenge und Temperatur der Kühlluft, Höhenposition der Kalibriervorrichtung sowie Temperatur der Umgebungsluft über entsprechende Sensoren **(20) (21) (24) (25)** erfasst, um Änderungen bereits frühzeitig zu erkennen und als Hilfsgrößen dem Rechenmodell der oben beschriebenen Stell- und Regelkreise zuzuführen.
Je vollständiger die relevanten Prozessparameter als Hilfsgrößen dem Prozessrechner **(30)** zur Verfügung gestellt werden, desto komplexer kann das hinterlegte Prozessmodell aufgebaut werden, welches aus den Folientemperaturdaten Korrekturgrößen für diese Prozessparameter ermittelt.

In einer nochmals erweiterten Ausführungsform werden die relevanten auftragsspezifischen Einstelldaten auf dem Prozeßrechner **(30)** in einer Auftragsdatenbank abgespeichert und später bei Wiederholung des Auftrags angewählt und automatisch angefahren, um den Anfahrprozess zu beschleunigen und eine reproduzierbare Produktqualität zu erhalten.
Hier sind vor allem die Kühlluftmengen und Temperaturen von Außen- und Innenkühlung der Folienblase, die Höhenposition der verfahrbaren Kalibriervorrichtung und der Anlagendurchsatz zu nennen.
Sofern die Produktionsanlage mit einer Durchsatzregelung/Laufmetergewichtsregelung **(40)** ausgerüstet ist, kann auch die Sollwertvorgabe für diese Regelung in das Gesamtsystem eingebunden werden.

In einer maximalen Erweiterungsstufe für Anlagen mit hohem Automatisierungsgrad kann das erfindungsgemäße System mit dem Anlagen-Leitrechner **(50)** der Produktionsanlage über eine Datenschnittstelle gekoppelt werden. Dabei können weitere Hilfsgrößen in das Prozessmodell einbezogen werden, die bereits für andere Zwecke im Leitrechner erfasst werden, beispielsweise die Schmelzetemperatur in der Extrusionseinheit.

Die Messung der Folientemperatur erfolgt vorzugsweise mit industrieerprobten, berührungslosen Messverfahren, z.B. mit Infrarot-Strahlungspyrometern.

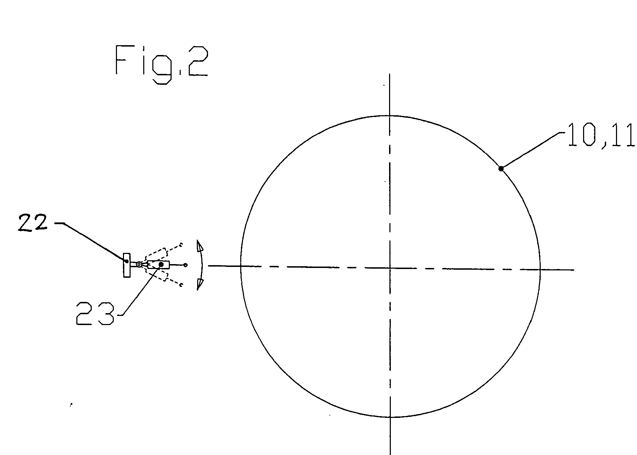

In einer weiteren Ausführungsform **(Fig.2)** oszillieren die auf einem gemeinsamen Sensorträger **(22)** montierten, berührungslos messenden Folientemperatursensoren **(23)** in einem kleinen Winkelbereich quer zur Produktionsrichtung, um kurzzeitige punktuelle Schwankungen durch entsprechende Mittelwertbildung auszugleichen. Die Oszillationsbewegung wird beispielsweise über einen motorgetriebenen Exzenter erzeugt.

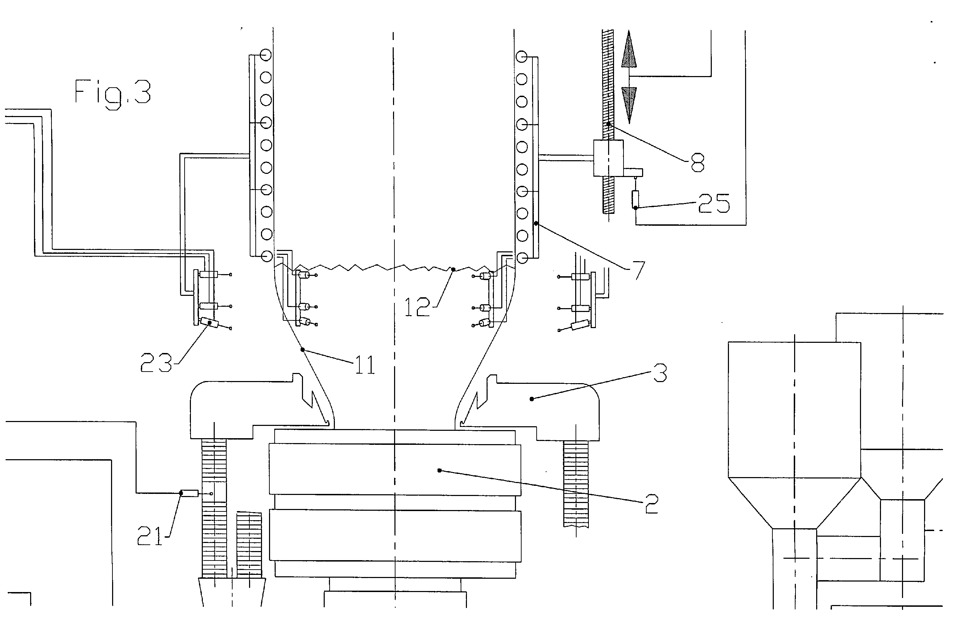

In einer weiteren Ausführungsform **(Fig.3)** wird eine Vielzahl von Folientemperatursensoren **(23)** in verschiedenen Höhen ringförmig um den Folienschlauch angeordnet und bildet damit aufeinanderfolgende Messebenen. Der Temperaturgradient entlang der Schlauchbildungszone kann dann aus den Temperaturmittelwerten der Messebenen gebildet werden.
Auch bei dieser Ausführungsform können die Sensoren an der höhenverstellbaren Kalibriervorrichtung **(7) (8)** angelenkt und mit dieser in der Höhe verfahrbar sein.
Möglich ist aber auch eine in fester Höhe montierte Sensoranordnung.

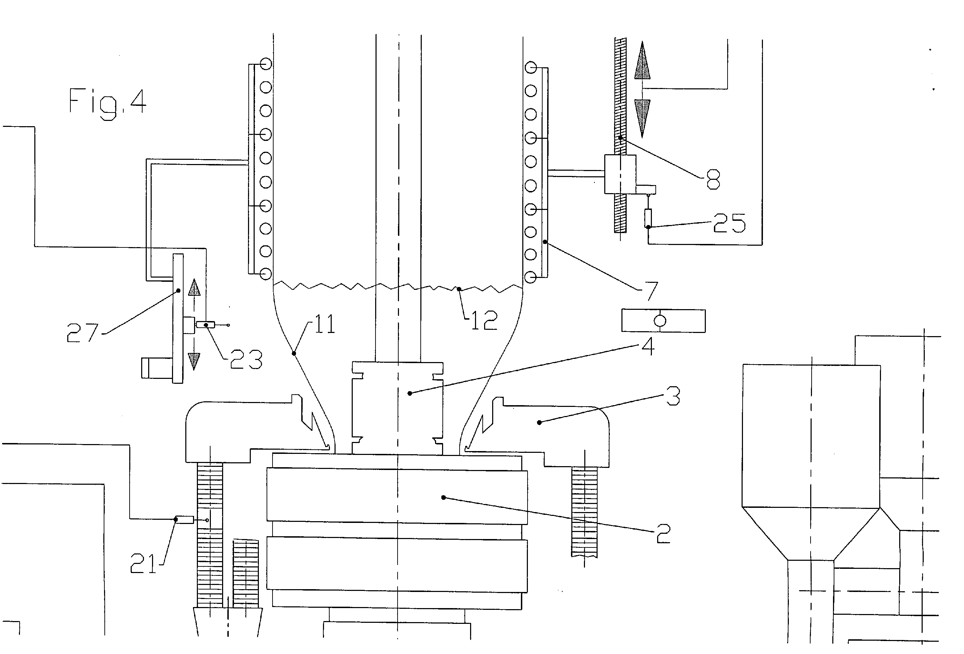

In einer weiteren Ausführungsform **(Fig.4)** wird nur 1 berührungslos messender Folientemperatursensor **(23)** verwendet, der auf einem in Produktionsrichtung der Anlage verfahrbaren Schlitten **(27)** angeordnet ist und in kurzen Meßzyklen den Temperaturverlauf auf einer Linie entlang der Schlauchbildungszone **(11)** aufnimmt.
Der Schlitten **(27)** kann dabei sowohl an der höhenverstellbaren Kalibriervorrichtung **(7) (8)** angelenkt und mit dieser in der Höhe verfahrbar sein, als auch in einer festen Höhenposition montiert.
In einer abgewandelten Ausführungsform kann diese Anordnung mit einer Oszillationsbewegung analog Fig.2 kombiniert werden, wobei der Schlitten **(27)** in diskreten Abständen kurz anhält, die Oszillationsbewegung einsetzt und für jeden Anhaltepunkt entlang der Schlauchbildungszone **(11)** ein Mittelwert aus den Temperaturmesswerten gebildet wird.
In einer erweiterten Ausführungsform werden mehrere dieser verfahrbaren Schlitten **(27)** symmetrisch um die Schlauchbildungszone **(11)** herum angeordnet.

In einer weiteren Ausführungsform werden statt der Sensoren eine oder mehrere sog. Wärmebildkameras eingesetzt, die keine punktuelle Temperatur, sondern die Temperaturverteilung eines gewissen Folienbereiches aufzeichnen.
Auch eine solche Wärmebildkamera kann auf einem in Anlagenrichtung verfahrbaren Schlitten angeordnet werden und in kurzen Meßzyklen ein Temperaturfeld entlang der Schlauchbildungszone **(11)** aufnehmen.

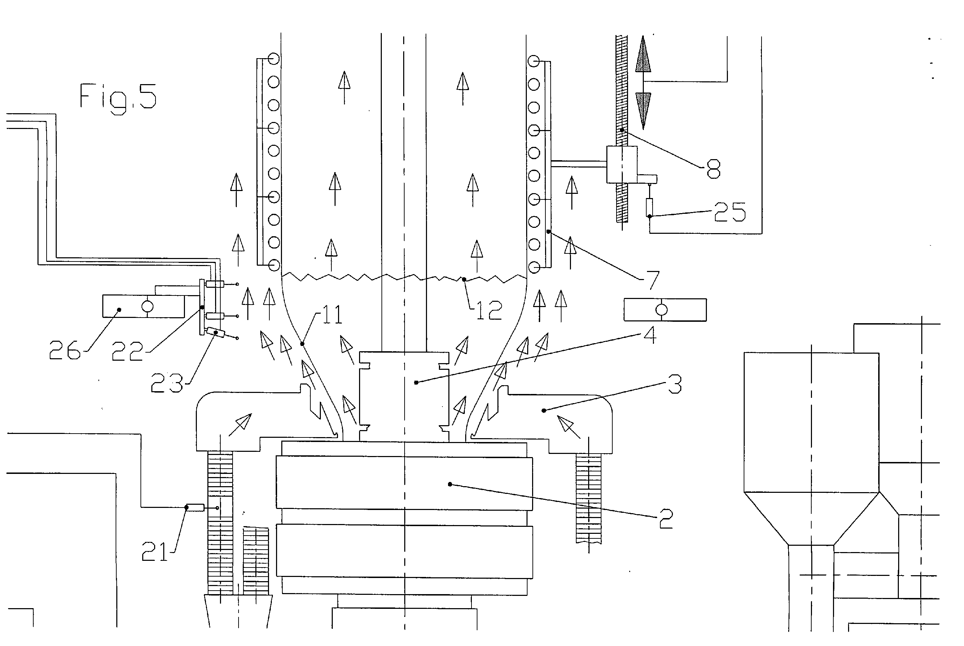

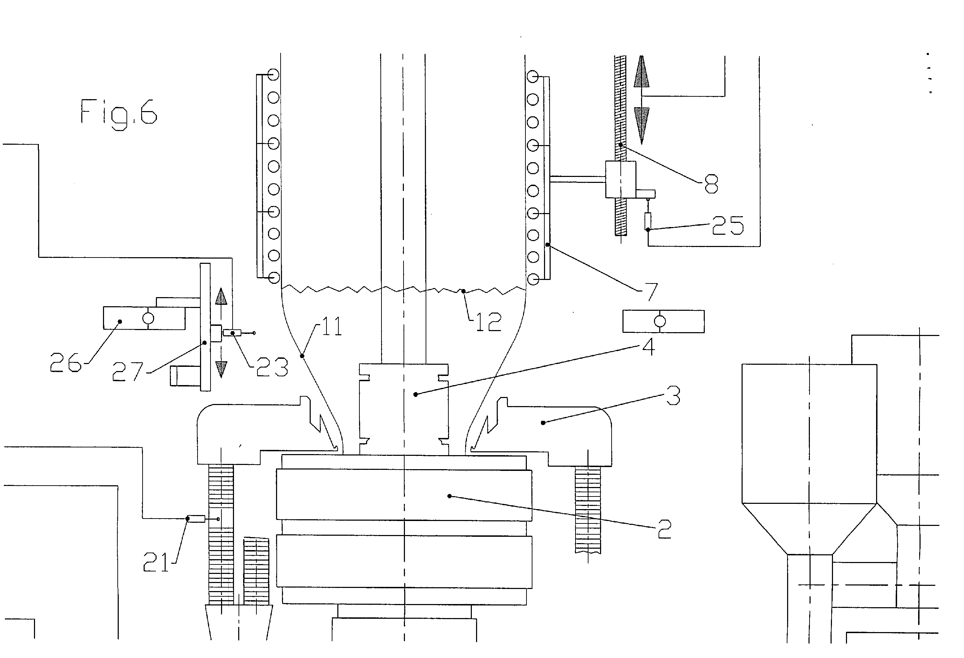

In einer weiteren Ausführungsform **(Fig.5)** werden Sensorträger **(22)** mit den Temperatursensoren **(23)** auf einer sogenannten Reversiervorrichtung **(26)** angeordnet, reversieren auf einer Kreisbahn um die Schlauchbildungszone **(11)** und messen die Temperatur auf mehreren fixen Umfangslinien des Folienschlauches. Der Reversierwinkel der Reversiervorrichtung **(26)** entspricht vorzugsweise einem Vollkreis von 360°, kann aber durchaus auch mit kleineren oder größeren Winkelbereichen ausgeführt werden. Werden zum Beispiel mehrere Sensorträger **(22)** am Umfang verteilt auf der Reversiervorrichtung **(26)** angebaut, genügt ein wesentlich kleinerer Reversierwinkel zur Messung des gesamten Folienschlauch-Umfangs.
Denkbar ist sowohl eine kontinuierliche Temperaturmessung während der Rotationsbewegung der Reversiervorrichtung **(26)** als auch ein Anhalten der Reversierung in definierten Winkelpositionen zur Aufnahme der Messwerte.
In einer abgewandelten Ausführungsform **(Fig.6)** ist lediglich ein Temperatursensor **(23)** über einen in Produktionsrichtung der Anlage angeordneten, verfahrbaren Schlitten **(27)** auf der Reversiervorrichtung **(26)** angebaut. Diese stoppt in definierten Winkelpositionen und der Temperatursensor **(23)** nimmt mit Hilfe des verfahrbaren Schlittens **(27)** den Temperaturverlauf auf einer Linie entlang der Schlauchbildungszone **(11)** auf. Um die Frequenz der Maßzyklen zu erhöhen, können auch mehrere verfahrbare Schlitten **(27)** mit je einem Temperatursensor **(23)** am Umfang der Reversiervorrichtung **(26)** angeordnet werden.

In einer weiteren Ausführungsform wird zur Anordnung eines zusätzlichen Temperatursensors die bereits vorhandene Reversiervorrichtung eines Dickenmeßgerätes zur Folienquerprofilmessung verwendet, welcher in vielen Anlagen unmittelbar nach der Kalibriervorrichtung angeordnet ist.
Dabei kann der Temperatursensor sowohl in den die Blasenoberfläche kontaktierenden Dickenmess-Sensor integriert sein oder auch als separates Bauteil an das Dickenmeßgerät bzw. die Reversiervorrichtung des Dickenmessgerätes adaptiert sein und berührungslos messen.
Auch in dieser Anordnung kann der Sensor mit einem verfahrbaren Schlitten kombiniert werden. Reversiervorrichtungen mit Dickenmessgerät zur Messung des Folienquerprofils sind als Stand der Technik bekannt.

### Bezeichnungsliste:

| | |
|---|---|
| 1 | Extrudereinheit bzw. Extrudereinheiten |
| 2 | Extrusionswerkzeug mit Ringkanal-Düse |
| 3 | Außenkühlung |
| 4 | Innenkühlung |
| 5 | Gebläse Außenkühlung (drehzahlgeregelt) |
| 6 | Kühlaggregat für Außenkühlluft |
| 7 | Kalibriervorrichtung |
| 8 | Höhenverstellung für Kalibriervorrichtung |
| 9 | Abzugseinheit |
| 10 | Schlauchfolienblase |
| 11 | Schlauchbildungszone |
| 12 | Einfriergrenze |
| 20 | Temperatursensor Außenkühlluft |
| 21 | Mengensensor Außenkühlluft |
| 22 | Sensorträger |
| 23 | Berührungslose Sensoren für Folientemperatur |
| 24 | Temperatursensor Umgebungsluft |
| 25 | Positionssensor Kalibriervorrichtung |
| 26 | Reversiervorrichtung |
| 27 | Verfahrbarer Schlitten |
| 30 | Schaltschrank mit Prozessrechner |
| 40 | Durchsatz- oder Metergewichts-Regeleinrichtung |
| 50 | Anlagen-Leitrechner |

## Patentansprüche

1. Verfahren zur Überwachung und Konstanthaltung der Produktionsbedingungen bei der Herstellung von Schlauchfolien, **dadurch gekennzeichnet, dass**
die Temperatur der Schlauchfolienblase **(10)** an mindestens zwei Punkten oder Umfangsbereichen in Produktionsrichtung nach dem Austritt aus dem Ringkanal des Extrusionswerkzeuges **(2)** kontinuierlich oder in kurzen Zeitzyklen gemessen wird, die Temperaturmessdaten in einen Prozessrechner **(30)** geführt, und abhängig von diesen Messdaten Stell- bzw. Korrekturgrößen für ausgewählte, die Prozeßkonstanz in der Schlauchbildungszone **(11)** beeinflussende Anlagenparameter ermittelt werden.

2. Verfahren zur Überwachung und Konstanthaltung der Produktionsbedingungen bei der Herstellung von Schlauchfolien, **dadurch gekennzeichnet, dass**
der Temperaturverlauf der Schlauchfolienblase **(10)** auf einer Linie in Produktionsrichtung entlang der Schlauchbildungszone **(11)** zwischen dem Austritt aus dem Ringkanal des Extrusionswerkzeuges **(2)** und der Kalibriervorrichtung **(7)** in kurzen Zeitzyklen gemessen wird, die Temperaturmessdaten in einen Prozessrechner **(30)** geführt, und abhängig von diesen Messdaten Stell- bzw. Korrekturgrößen für ausgewählte, die Prozeßkonstanz in der Schlauchbildungszone **(11)** beeinflussende Anlagenparameter ermittelt werden.

3. Verfahren nach Anspruch 1 oder 2, **dadurch gekennzeichnet, dass**
zusätzlich zur Messung der Folientemperatur auch die Parameter Kühlluftmenge, Kühllufttemperatur, Anlagendurchsatz und Höhenposition der Kalibrierung oder eine Auswahl aus diesen Parametern erfaßt und dem Prozeßrechner **(30)** als Hilfsgrößen zugeführt werden.

4. Verfahren nach mindestens einem der Ansprüche 1 bis 3, **dadurch gekennzeichnet, dass** zusätzlich die Schmelzetemperatur der Extrudereinheit bzw. bei Coextrusionsanlagen der Extrudereinheiten dem Prozeßrechner **(30)** als Hilfsgrößen zugeführt werden.

5. Verfahren nach mindestens einem der Ansprüche 1 bis 4, **dadurch gekennzeichnet, dass**
abhängig von den gemessenen Folientemperaturdaten die bei der Blasen-Außenkühlung **(3)** am Kühlluftring umgesetzte Kühlluft in ihrer Menge angepasst wird.

6. Verfahren nach mindestens einem der Ansprüche 1 bis 5, **dadurch gekennzeichnet, dass**
abhängig von den gemessenen Folientemperaturdaten die bei der Blasen-Innenkühlung **(4)** umgesetzte Kühlluft in ihrer Menge angepasst wird.

7. Verfahren nach mindestens einem der Ansprüche 1 bis 4, **dadurch gekennzeichnet, dass**
abhängig von den gemessenen Folientemperaturdaten die bei der Blasen-Aussenkühlung **(3)** und Blasen-Innenkühlung **(4)** umgesetzte Kühlluft in ihrer Menge angepasst wird.

8. Verfahren nach mindestens einem der Ansprüche 1 bis 7, **dadurch gekennzeichnet, dass**
abhängig von den gemessenen Folientemperaturdaten die bei der Blasen-Außenkühlung **(3)** am Kühlluftring umgesetzte Kühlluft in ihrer Temperatur angepasst wird.

9. Verfahren nach mindestens einem der Ansprüche 1 bis 8, **dadurch gekennzeichnet, dass**
abhängig von den gemessenen Folientemperaturdaten die bei der Blasen-Innenkühlung **(4)** umgesetzte Kühlluft in ihrer Temperatur angepasst wird.

10. Verfahren nach mindestens einem der Ansprüche 1 bis 7, **dadurch gekennzeichnet, dass**
abhängig von den gemessenen Folientemperaturdaten die bei der Blasen-Aussenkühlung **(3)** und Blasen-Innenkühlung **(4)** umgesetzte Kühlluft in ihrer Temperatur angepasst wird.

11. Verfahren nach mindestens einem der Ansprüche 1 bis 10, **dadurch gekennzeichnet, dass**
abhängig von den gemessenen Folientemperaturdaten die Soll-Ausstoßleistung der Anlage angepasst wird, z.B. über Änderung der Sollvorgabe für die Durchsatz- oder Metergewichtsregelung **(40).**

12. Verfahren nach mindestens einem der Ansprüche 1 bis 11, **dadurch gekennzeichnet, dass**
anhand der gemessenen Folientemperaturdaten die vertikale Position der höhenverfahrbaren Kalibriereinrichtung **(7) (8)** angepasst wird.

13. Verfahren nach mindestens einem der Ansprüche 5 bis 7, **dadurch gekennzeichnet, dass**
die Anpassung der Kühlluftmenge durch Drehzahländerung der Kühlgebläse erfolgt.

14. Verfahren nach mindestens einem der Ansprüche 5 bis 7, **dadurch gekennzeichnet, dass**
die Anpassung der Kühlluftmenge durch Stellklappen oder verstellbare Blenden erfolgt.

15. Verfahren nach mindestens einem der Ansprüche 1 bis 14, **dadurch gekennzeichnet, dass**
die Temperaturmessung berührungslos mit einem oder mehreren Infrarot-Strahlungspyrometern erfolgt.

16. Verfahren nach mindestens einem der Ansprüche 1 bis 14, **dadurch gekennzeichnet, dass**
die Temperaturmessung mit einer oder mehreren Infrarot-Wärmebild-Kameras erfolgt.

17. Vorrichtung zur Durchführung des Verfahrens nach mindestens einem der Ansprüche 1 bis 16, **dadurch gekennzeichnet, dass**
2 oder mehr berührungslos messende Temperatursensoren **(23)** in Produktionsrichtung der Anlage hintereinander auf einem gemeinsamen Sensorträger **(22)** angebaut und im Bereich der Schlauchbildungszone **(11)** und der Kalibriervorrichtung **(7)** in einer festen Höhenposition angeordnet sind.

18. Vorrichtung zur Durchführung des Verfahrens nach mindestens einem der Ansprüche 1 bis 16,
**dadurch gekennzeichnet, dass**
zwei oder mehr berührungslos messende Temperatursensoren **(23)** in Produktionsrichtung der Anlage hintereinander auf einem gemeinsamen Sensorträger **(22)** im Bereich der Schlauchbildungszone **(11)** und der Kalibriervorrichtung **(7)** angebaut sind, wobei der Sensorträger **(22)** über eine Verbindungskonstruktion mit der höhenverfahrbaren Kalibriervorrichtung **(7) (8)** gekoppelt ist und mit dieser zusammen in der Höhe verfährt.

19. Vorrichtung zur Durchführung des Verfahrens nach mindestens einem der Ansprüche 1 bis 16,
**dadurch gekennzeichnet, dass**
je 2 oder mehr berührungslos messende Temperatursensoren **(23)** in Produktionsrichtung der Anlage hintereinander auf mehreren Sensorträgern **(22)** angebaut werden, wobei die Sensorträger **(22)** im Bereich der Schlauchbildungszone **(11)** und der Kalibriervorrichtung **(7)** auf gleicher Höhe am Umfang verteilt in einer festen Höhenposition angeordnet sind.

20. Vorrichtung zur Durchführung des Verfahrens nach mindestens einem der Ansprüche 1 bis 16,
**dadurch gekennzeichnet, dass**
je 2 oder mehr berührungslos messende Temperatursensoren **(23)** in Produktionsrichtung der Anlage hintereinander auf mehreren Sensorträgern **(22)** angebaut werden, wobei die Sensorträger (22) im Bereich der Schlauchbildungszone **(11)** und der Kalibriervorrichtung **(7)** auf gleicher Höhe am Umfang verteilt angeordnet sind und über eine Verbindungskonstruktion mit der höhenverfahrbaren Kalibriervorrichtung **(7) (8)** gekoppelt sind und mit dieser zusammen in der Höhe verfahren.

21. Vorrichtung zur Durchführung des Verfahrens nach mindestens einem der Ansprüche 1 bis 16,
**dadurch gekennzeichnet, dass**
einer oder mehrere berührungslos messende Temperatursensoren **(23)** auf einem verfahrbaren Schlitten **(27)** angebaut sind, der in Produktionsrichtung der Anlage im Bereich der Schlauchbildungszone **(11)** und der Kalibriervorrichtung **(7)** angeordnet ist.

22. Vorrichtung zur Durchführung des Verfahrens nach mindestens einem der Ansprüche 1 bis 16,
**dadurch gekennzeichnet, dass**
einer oder mehrere berührungslos messende Temperatursensoren **(23)** auf einem verfahrbaren Schlitten **(27)** angebaut sind, der in Produktionsrichtung der Anlage im Bereich der Schlauchbildungszone **(11)** und der Kalibriervorrichtung **(7)** angeordnet ist und der über eine Verbindungskonstruktion mit der höhenverfahrbaren Kalibriervorrichtung **(7) (8)** gekoppelt ist und mit dieser zusammen in der Höhe verfährt.

23. Vorrichtung zur Durchführung des Verfahrens nach mindestens einem der Ansprüche 1 bis 16,
**dadurch gekennzeichnet, dass**
je einer oder mehrere berührungslos messende Temperatursensoren **(23)** auf mehreren verfahrbaren Schlitten **(27)** angebaut sind, die in Produktionsrichtung der Anlage im Bereich der Schlauchbildungszone **(11)** und der Kalibriervorrichtung (7) auf gleicher Höhe am Umfang verteilt angeordnet sind.

24. Vorrichtung zur Durchführung des Verfahrens nach mindestens einem der Ansprüche 1 bis 16,
**dadurch gekennzeichnet, dass**
je einer oder mehrere berührungslos messende Temperatursensoren **(23)** auf mehreren verfahrbaren Schlitten **(27)** angebaut sind, die in Produktionsrichtung der Anlage im Bereich der Schlauchbildungszone **(11)** und der Kalibriervorrichtung **(7)** auf gleicher Höhe am Umfang verteilt angeordnet sind und über eine Verbindungskonstruktion mit der höhenverfahrbaren Kalibriervorrichtung **(7) (8)** gekoppelt sind und mit dieser zusammen in der Höhe verfahren.

25. Vorrichtung nach einem der Ansprüche 17 bis 20, **dadurch gekennzeichnet, dass** der oder die Sensorträger **(22)** horizontal schwenkbar gelagert sind und eine Oszillierbewegung quer zur Produktionsrichtung der Anlage ausüben können.

26. Vorrichtung nach einem der Ansprüche 21 oder 24, **dadurch gekennzeichnet, dass** der oder die verfahrbaren Schlitten **(27)** horizontal schwenkbar gelagert sind und eine Oszillierbewegung quer zur Produktionsrichtung der Anlage ausüben können.

27. Vorrichtung zur Durchführung des Verfahrens nach mindestens einem der Ansprüche 1 bis 16,
**dadurch gekennzeichnet, dass**
eine Vielzahl von berührungslos messende Temperatursensoren **(23)** in einer oder mehreren Ebenen ringförmig um die Schlauchfolienblase **(10)** im Bereich der Schlauchbildungszone **(11)** und der Kalibriervorrichtung **(7)** in einer festen Höhenposition angeordnet sind.

28. Vorrichtung zur Durchführung des Verfahrens nach mindestens einem der Ansprüche 1 bis 16,
**dadurch gekennzeichnet, dass**
eine Vielzahl von berührungslos messende Temperatursensoren **(23)** in einer oder mehreren Ebenen ringförmig um die Schlauchfolienblase **(10)** im Bereich der Schlauchbildungszone **(11)** und der Kalibriervorrichtung **(7)** angeordnet und über eine Verbindungskonstruktion mit der höhenverfahrbaren Kalibriervorrichtung **(7) (8)** gekoppelt sind und mit dieser zusammen in der Höhe verfahren.

29. Vorrichtung zur Durchführung des Verfahrens nach mindestens einem der Ansprüche 1 bis 16,
**dadurch gekennzeichnet, dass**
ein Sensorträger **(22)** mit mindestens 2 höhenversetzt angeordneten, berührungslos messenden Temperatursensoren **(23)** auf einer Reversiervorrichtung **(26)** im Bereich der Schlauchbildungszone **(11)** und der Kalibriervorrichtung **(7)** angeordnet ist und um diesen Bereich herum auf einer Kreisbahn oder einem Kreisbahnausschnitt verfahren wird.

30. Vorrichtung zur Durchführung des Verfahrens nach mindestens einem der Ansprüche 1 bis 16,
**dadurch gekennzeichnet, dass**
mehrere Sensorträger **(22)** mit mindestens 2 höhenversetzt angeordneten, berührungslos messenden Temperatursensoren **(23)** am Umfang verteilt auf einer Reversiervorrichtung **(26)** im Bereich der Schlauchbildungszone **(11)** und der Kalibriervorrichtung **(7)** angeordnet sind und um diesen Bereich herum auf einer Kreisbahn oder einem Kreisbahnausschnitt verfahren werden.

31. Vorrichtung zur Durchführung des Verfahrens nach mindestens einem der Ansprüche 1 bis 16,
**dadurch gekennzeichnet, dass**
ein in Produktionsrichtung der Anlage angeordneter, verfahrbarer Schlitten **(27)** mit lediglich einem berührungslos messenden Temperatursensor **(23)** auf einer Reversiervorrichtung **(26)** im Bereich der Schlauchbildungszone **(11)** und der Kalibriervorrichtung **(7)** angeordnet ist und um diesen Bereich herum auf einer Kreisbahn oder einem Kreisbahnausschnitt verfahren wird.

32. Vorrichtung zur Durchführung des Verfahrens nach mindestens einem der Ansprüche 1 bis 16,
**dadurch gekennzeichnet, dass**
mehrere in Produktionsrichtung der Anlage angeordnete, verfahrbare Schlitten **(27)** mit je einem berührungslos messenden Temperatursensor **(23)** am Umfang verteilt auf einer Reversiervorrichtung **(26)** im Bereich der Schlauchbildungszone **(11)** und der Kalibriervorrichtung **(7)** angeordnet sind und um diesen Bereich herum auf einer Kreisbahn oder einem Kreisbahnausschnitt verfahren werden.
